# EUROPÄISCHE PATENTSCHRIFT

(11) **EP 3 197 241 B1**
(45) Veröffentlichungstag und Bekanntmachung des Hinweises auf die Patenterteilung: **13.05.2020**
(21) Anmeldenummer: 16151901.2
(22) Anmeldetag: 19.01.2016
(51) Int. Cl.: H05B 1/02, G01K 7/34, H05B 3/26, H05B 3/28

(54) **HEIZEINRICHTUNG UND VERFAHREN ZUR TEMPERATURMESSUNG AN DER HEIZEINRICHTUNG**
HEATING DEVICE AND METHOD FOR MEASURING THE TEMPERATURE ON THE HEATING ELEMENT
DISPOSITIF DE CHAUFFAGE ET PROCEDE DE MESURE DES TEMPERATURES SUR UN DISPOSITIF DE CHAUFFAGE

(43) Veröffentlichungstag der Anmeldung: 26.07.2017
(73) Patentinhaber: E.G.O. Elektro-Gerätebau GmbH, 75038 Oberderdingen (DE)
(72) Erfinder: Block, Volker, 75015 Bretten (DE); Kümmerle, Hannes, 75038 Oberderdingen (DE); Mühlnikel, Roland, 75015 Bretten (DE); Robin, Bernd, 76703 Kraichtal (DE); Schmidt, Kay, 75038 Oberderdingen (DE); Schönemann, Konrad, 75056 Sulzfeld (DE); Tafferner, Michael, 76316 Malsch (DE)
(74) Vertreter: Patentanwälte Ruff, Wilhelm, Beier, Dauster & Partner mbB

(56) Entgegenhaltungen:
- DE-A1- 10 041 921
- DE-A1-102007 002 593
- DE-A1-102013 200 277
- DE-A1-102014 201 640

## Beschreibung

### Anwendungsgebiet und Stand der Technik

Die Erfindung betrifft eine Heizeinrichtung und Verfahren zur Messung der Temperatur an einer solchen Heizeinrichtung, insbesondere eine elektrische Heizeinrichtung für flüssige Medien wie Wasser odgl..

Es ist aus der DE 102013200277 A1 grundsätzlich bekannt, an einer Heizeinrichtung eine Temperaturmessung durchzuführen unter Nutzung einer Temperaturabhängigkeit der Eigenschaften einer Dielektrikumsschicht, insbesondere der kapazitiven und/oder resistiven Eigenschaften der Dielektrikumsschicht. Dabei besteht hier die Problematik, dass die Isolationseigenschaften verbesserungswürdig sind.

Aus der DE 10 2014 201 640 A1 ist eine Heizeinrichtung bekannt, die einen flächigen Träger, einen Heizleiter, eine Messeinrichtung, eine Dielektrikumsschicht über dem Träger mit temperaturabhängigen kapazitiven Eigenschaften und zwei Elektroden über dieser Dielektrikumsschicht aufweist. Der Heizleiter ist auf der Dielektrikumsschicht aufgebracht. Die Messeinrichtung ist mit den beiden Elektroden verbunden und dazu ausgebildet, eine Änderung einer Kapazität an den Elektroden zu erfassen und dies als Maß für eine Temperaturänderung an der Heizeinrichtung auszuwerten.

Aus der DE 100 41 921 A1 ist ein Sensor bekannt mit einem elektrischen Widerstand, der zur Temperaturmessung oder als Sensorheizung dienen kann. Hier sind zwei Elektroden vorgesehen, die mehrere nebeneinander und parallel zueinander verlaufende Elektrodenfinger aufweisen, die abwechselnd nebeneinander angeordnet sind. Damit kann ein Gassensor geschaffen werden, der vorteilhafte und genaue Messeigenschaften aufweist.

### Aufgabe und Lösung

Der Erfindung liegt die Aufgabe zugrunde, eine eingangs genannte Heizeinrichtung sowie eingangs genannte Verfahren zur Temperaturmessung an einer solchen Heizeinrichtung zu schaffen, mit denen Probleme des Standes der Technik gelöst werden können und es insbesondere möglich ist, eine praxistaugliche Heizeinrichtung zur Verfügung zu stellen samt praxistauglichen Verfahren zur Temperaturmessung daran.

Gelöst wird diese Aufgabe durch eine Heizeinrichtung mit den Merkmalen des Anspruchs 1 sowie durch Verfahren mit den Merkmalen der Ansprüche 13 oder 14. Vorteilhafte sowie bevorzugte Ausgestaltungen der Erfindung sind in den weiteren Ansprüchen angegeben und werden im Folgenden näher erläutert. Dabei werden manche der Merkmale nur für die Heizeinrichtung oder nur für eines der Verfahren beschrieben. Sie sollen jedoch unabhängig davon sowohl für die Heizeinrichtung als auch für die Verfahren selbständig gelten können. Der Wortlaut der Ansprüche wird durch ausdrückliche Bezugnahme zum Inhalt der Beschreibung gemacht.

Es ist vorgesehen, dass die Heizeinrichtung einen flächigen Träger aufweist, vorteilhaft ein flaches bzw. planes Substrat aus Keramik oder Metall bzw. Stahl, alternativ ein Rohr odgl.. Des Weiteren weist die Heizeinrichtung mindestens einen Heizleiter auf, vorteilhaft einen Dickschicht-Heizleiter, wie dies allgemein aus dem vorgenannten Stand der Technik bekannt ist. Die Heizeinrichtung weist eine Messeinrichtung auf, mit der mindestens kapazitive Eigenschaften bzw. eine kapazitive Änderung erfasst werden kann. In der Messeinrichtung kann auch eine entsprechende Steuerung und/oder Auswertung vorgesehen sein, vorteilhaft sind darin sämtlichen Funktionen integriert, besonders vorteilhaft in einem Mikrocontroller.

Des Weiteren ist eine Dielektrikumsschicht über dem Träger vorgesehen, wobei die Dielektrikumsschicht kapazitive Eigenschaften aufweist, die temperaturabhängig sind. Diese kann zwar direkt auf dem Träger verlaufen, was aber nicht sein muss, es können nämlich noch weitere Schichten oder Bauteile dazwischen angeordnet sein. Des Weiteren sind zwei Elektroden vorgesehen, die über der Dielektrikumsschicht angeordnet sind, so dass die Dielektrikumsschicht zwischen den Elektroden und dem Träger vorgesehen ist. Die beiden Elektroden verlaufen nebeneinander und können vorteilhaft elektrisch voneinander getrennt sein, müssen dies aber nicht sein. Die Elektroden bilden zusammen mit der Dielektrikumsschicht und dem Träger jeweils eine Kapazität bzw. Kondensatoren.

Außerdem ist eine Basisisolationsschicht über den beiden Elektroden vorgesehen, unter Umständen auch direkt auf die beiden Elektroden aufgebracht, so dass die Elektroden zwischen Basisisolationsschicht und Dielektrikumsschicht angeordnet sind. Über der Basisisolationsschicht ist der mindestens eine Heizleiter angeordnet, so dass die Basisisolationsschicht im Wesentlichen dazu dient, die Heizleiter, die üblicherweise mit Netzspannung und hohen Strömen betrieben werden, auf alle Fälle sicher und dauerhaft gegen die Elektroden, den Träger und das zu beheizende Medium zu isolieren.

Die Messeinrichtung ist mit den beiden Elektroden verbunden und dazu ausgebildet, eine Änderung einer Kapazität an den Elektroden zu erfassen, wobei diese Änderung an der Kapazität temperaturabhängig ist aufgrund einer Temperaturabhängigkeit der Eigenschaften der Dielektrikumsschicht. Diese Kapazitätsänderung wird als Maß für eine Temperaturänderung an der Heizeinrichtung ausgewertet. Somit lässt sich mit der erfindungsgemäßen Heizeinrichtung sowie einem erfindungsgemäßen Verfahren anhand der temperaturabhängigen Kapazitätsänderung die Temperatur an der Heizeinrichtung, zumindest im Bereich der Elektroden, erfassen bzw. die Temperatur kann aus der Kapazitätsänderung bestimmt werden. Anders als beim vorgenannten Stand der Technik wird also eine temperaturabhängige Änderung einer Kapazität für die Temperaturmessung herangezogen, und zwar zumindest auch, und nicht ausschließlich eine temperaturabhängige Änderung eines elektrischen Widerstands.

In einer ersten grundsätzlichen Ausgestaltung der Erfindung, die als besonders vorteilhaft angesehen wird, ist die Messeinrichtung mit den beiden Elektroden verbunden bzw. nur mit den beiden Elektroden. Dabei kann die Messeinrichtung nur zwei Eingänge aufweisen, die mit den beiden Elektroden derart verbunden sind, dass jeder Eingang mit einer Elektrode verbunden ist. Dabei wird also ausschließlich an den Elektroden eine Änderung der Kapazität abhängig von der Temperatur bzw. von der temperaturabhängigen Änderung der kapazitiven Eigenschaften der Dielektrikumsschicht erfasst. Ist der Träger ein metallischer Träger dann dient er sozusagen als den Elektroden gegenüberliegende Kondensatorplatte, so dass letztlich eine zumindest teilweise serielle Verschaltung von Kapazitäten vorliegt. Das Dielektrikum in diesen Kapazitäten ist die temperaturabhängige Dielektrikumsschicht.

In einer anderen zweiten grundsätzlichen Ausgestaltung der Erfindung könnte es möglich sein, dass die Messeinrichtung einerseits an die beiden Elektroden gemeinsam angeschlossen ist, diese also miteinander verbunden sind, und andererseits mit dem Träger. Dann läge eine Parallelschaltung von zwei Kapazitäten vor, deren gesamte Kapazität einerseits von den beiden Elektroden gemeinsam und andererseits von dem Träger als jeweiliger Anschluss an einen Eingang der Messeinrichtung erfasst werden kann. In ähnlicher Form wie zuvor beschrieben wirkt sich auch hier eine Temperaturabhängigkeit der kapazitiven Eigenschaften der Dielektrikumsschicht als Dielektrikum in den Kapazitäten aus, was zur Messung der Temperatur an der Heizeinrichtung verwendet wird.

In weiterer Ausgestaltung der Erfindung kann die Dielektrikumsschicht direkt auf den Träger aufgebracht werden. Vorteilhaft kann sie an einer Trägerseite im Wesentlichen dessen gesamte Oberfläche bedecken oder zumindest die Oberfläche im Bereich der Heizleiter. So kann sich der Träger durchaus auch noch weiter erstrecken als er von der Dielektrikumsschicht und/oder den Heizleitern überdeckt wird. Dabei sollte die Erstreckung der Dielektrikumsschicht mindestens so groß sein wie die der Heizleiter, da diese ja für die Beheizung der Heizeinrichtung vorgesehen sind und schließlich auch in ihrem Bereich eine Temperaturmessung vorgenommen werden sollte, vorteilhaft in ihrem gesamten Bereich.

Die Dielektrikumsschicht ist vorteilhaft eine Glasschicht oder eine Glas-basierte Schicht mit temperaturabhängig veränderlichem εᵣ. Sie kann auch aus Glaskeramik bestehen oder Glaskeramik aufweisen. Unter Umständen kann sogar vorgesehen sein, dass eine Temperaturabhängigkeit des elektrischen Widerstands sehr gering ist, vor allem dann, wenn der elektrische Widerstand bzw. dessen Temperaturabhängigkeit nicht ausgewertet werden.

Eine Änderung der kapazitiven Eigenschaften bzw. von εᵣ bei der Dielektrikumsschicht zwischen normaler Betriebstemperatur der Heizeinrichtung bei Heizbetrieb und einer als kritisch angesehenen Übertemperatur, bei der eine Reduzierung oder Abschaltung der Leistung erfolgen sollte, kann um den Faktor 2 bis 4 erfolgen.

In Ausgestaltung der Erfindung ist es möglich, mindestens eine der beiden Elektroden direkt auf die Dielektrikumsschicht aufzubringen. Vorteilhaft werden beide Elektroden direkt auf die Dielektrikumsschicht aufgebracht. Dabei ist es bevorzugt, wenn die beiden Elektroden sozusagen in einer Ebene liegen bzw. aus demselben Material mit derselben Dicke bestehen. Besonders bevorzugt werden beide Elektroden in einem einzigen Verfahrensschritt auf die Heizeinrichtung bzw. auf die Dielektrikumsschicht aufgebracht, was für eine leichtere Herstellung sorgt.

Bei der Erfindung ist vorgesehen, dass beide Elektroden mehrere nebeneinander bzw. parallel zueinander verlaufende Elektrodenfinger aufweisen. Diese Elektrodenfinger der beiden Elektroden sind ohne direkten elektrischen Kontakt zwischen den beiden Elektroden mit ähnlichen Elektrodenfingern der anderen Elektrode abwechselnd nebeneinander vorgesehen. Dabei können sie beispielsweise kammartig gegenüberliegen und abwechselnd ineinander greifen. Es können ausgehend von gegenüberliegenden und vorteilhaft parallelen Basisstreifen der Elektroden jeweils gleich viele Elektrodenfinger an jeder Elektrode vorgesehen sein, die sich in Richtung des Basisstreifens der anderen Elektrode erstrecken. Dabei können die beiden Elektroden an ihren Elektrodenfingern einen gewissen Abstand zueinander aufweisen, beispielsweise 0,5 mm bis 2 mm oder 3 mm. Für eine möglichst große Signalstärke sollte die Fläche der Heizeinrichtung möglichst weitgehend bzw. vollständig mit den beiden Elektroden bedeckt sein. Auch der Abstand der Elektrodenfinger zueinander sollte relativ gering sein, ohne die elektrische Isolation gegeneinander zu beeinträchtigen. Bevorzugt sind dabei jeweils gleich viele Elektrodenfinger an jeder Elektrode vorgesehen. Vorteilhaft sind die Gesamtflächen der beiden Elektroden um maximal 10% unterschiedlich, besonders vorteilhaft sind die Gesamtflächen beider Elektroden gleich.

In alternativer Ausgestaltung zu im Wesentlichen gleichen und gleich groß ausgebildeten Elektroden, die beide dieselbe Elektrodenfläche aufweisen, kann auch eine ungleiche Verteilung der Elektrodenfläche in bestimmten Bereichen der Heizeinrichtung vorgesehen sein. Dadurch wäre eine Messung unterschiedlicher Temperaturen in diesen Bereichen bzw. eine gewisse Lokalisierung von Überhitzungen in diesen Bereichen möglich. Hierzu wird beispielsweise auf die europäische Patentanmeldung EP 15168028.7 mit Anmeldetag vom 18. Mai 2015 derselben Anmelderin verwiesen, in der dieses Prinzip dargestellt und beschrieben ist. So können bei dieser Ausgestaltung der Erfindung die Breiten der vorgenannten Elektrodenfinger der beiden Elektroden in verschiedenen Bereichen unterschiedlich sein. Insbesondere können in bestimmten Bereichen die Elektrodenfinger der einen Elektrode mindestens 10% breiter sein als die Elektrodenfinger der anderen Elektrode, vorteilhaft mindestens 50% breiter.

In weiterer Ausgestaltung der Erfindung kann die Basisisolationsschicht vorteilhaft direkt auf die beiden Elektroden aufgebracht sein. Diese Basisisolationsschicht stellt die hauptsächliche Isolierung der Heizleiter dar, also gegen die Elektroden und vor allem gegen den Träger. Aus diesem Grund kann sie dicker sein als die Dielektrikumsschicht, vorteilhaft isoliert sie auch besser bzw. weist auch eine geringere Temperaturabhängigkeit ihrer Eigenschaften auf oder ändert diese Eigenschaften erst bei deutlich höheren Temperaturen als die Dielektrikumsschicht. Vorteilhaft beträgt die Temperaturabhängigkeit der kapazitiven und/oder resistiven Eigenschaften der Basisisolationsschicht weniger als 50% derjenigen der Dielektrikumsschicht bzw. ändert sich nur halb so stark, insbesondere weniger als 20%. Vor allem der elektrische Widerstand der Basisisolationsschicht sollte auch größer sein als derjenige der Dielektrikumsschicht, vorteilhaft mehr als fünfmal größer.

Die Heizleiter können direkt auf die Basisisolationsschicht aufgebracht werden. Sowohl für die Dielektrikumsschicht als auch für die Basisisolationsschicht kann eine aus dem Stand der Technik bekannte Materialwahl getroffen werden, insbesondere Gläser bzw. glasartige Materialien bieten sich hier an. Es können mehrere längliche Abschnitte eines Heizleiters vorgesehen sein, beispielsweise als Leiterschleifen mit mäanderförmigem Verlauf. Alternativ kann auch ein flächiger Heizleiter vorgesehen sein, der eine weitgehend geschlossene bzw. ununterbrochene Fläche bedeckt, vorteilhaft in Rechteckform. Für die Heizleiter bieten sich ebenfalls bekannte und gängige Materialien an, die sich vor allem für Dickschicht-Heizleiter gut verwenden lassen. Vorteilhaft werden alle Heizleiter der Heizeinrichtung auf die Basisisolationsschicht und nebeneinander aufgebracht, insbesondere im selben Verfahrensschritt bzw. gleichzeitig. Dies ist aber aus dem Stand der Technik bekannt.

Über den Heizleitern kann dann noch einmal eine Abdeckschicht vorgesehen sein, und zwar sowohl für deren elektrische Isolation nach außen aus Sicherheitsgründen als auch zum Schutz gegen atmosphärische oder mechanische Beschädigungen von außen. Auch dies ist dem Fachmann grundsätzlich aus dem Stand der Technik bekannt.

In weiterer Ausgestaltung der Erfindung ist es möglich, dass die Messeinrichtung zusätzlich mit dem Träger verbunden ist und dazu ausgebildet ist, den elektrischen Widerstand zwischen mindestens einer der beiden Elektroden, vorzugsweise beiden Elektroden, und dem Träger zu erfassen. Die mögliche Verbindung der Messeinrichtung mit dem Träger wurde vorstehend bereits beschrieben. Da zumindest bei dieser Ausgestaltung der Erfindung die Dielektrikumsschicht auch temperaturabhängige resistive Eigenschaften aufweist, also einen temperaturabhängigen elektrischen Widerstand, kann dies zusätzlich bzw. zu Kontrollzwecken für eine Temperaturmessung an der Heizeinrichtung ausgewertet werden. Dazu können in der Messeinrichtung Daten bzw. die Abhängigkeit des temperaturabhängigen elektrischen Widerstands der Dielektrikumsschicht von der Temperatur abgespeichert sein. Allgemein kann so, vorteilhaft anhand eines Vergleichs mit den genannten abgespeicherten und/oder bekannten Zusammenhängen, aufgrund der Temperatur durch Vergleich mit solchen bekannten Werten eine Temperaturmessung erfolgen.

Anhand der durch die Temperaturmessung gewonnenen Daten bzw. Temperatur kann einerseits eine Temperaturausgabe erfolgen, beispielsweise an eine Bedienperson zur Beeinflussung des weiteren Betriebs der Heizeinrichtung. Alternativ kann bei gefährlich hoher Temperatur bzw. Erreichen einer kritischen Temperatur die Heizleistung an der Heizeinrichtung gesenkt oder ganz abgeschaltet werden.

In weiterer Ausgestaltung der Erfindung ist es möglich, dass der Heizbetrieb der Heizeinrichtung kurzzeitig unterbrochen wird, während die Temperatur gemessen wird. So können mögliche Störeinflüsse verhindert werden. Insbesondere kann dadurch noch besser und direkter die Temperatur des an der Heizeinrichtung vorhandenen und/oder vorbeiströmenden Mediums erfasst werden, beispielsweise um nicht nur eine Sicherheitsfunktion für die Heizeinrichtung darzustellen, sondern auch um tatsächlich die Temperatur an dem zu beheizenden Medium zu erfassen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf eine erste erfindungsgemäße Heizeinrichtung mit zwei ineinander verschränkten Elektroden, über denen ein Heizleiter verläuft,
- Fig. 2: eine schematische Darstellung eines Ersatzschaltbilds zur Bestimmung einer Kapazitätsänderung,
- Fig. 3: die Anordnung aus Fig. 2 mit der Erweiterung, dass zusätzlich zu den Anschlüssen an die Elektroden eine Steuerung mit dem Träger verbunden ist,
- Fig. 4: eine auseinandergezogene Schnittdarstellung durch eine zweite Heizeinrichtung ähnlich der ersten Heizeinrichtung mit mehr Elektrodenfingern und mehr Heizleitern und
- Fig. 5: die Heizeinrichtung aus Fig. 4 im funktionstauglichen Zustand.

### Detaillierte Beschreibung der Ausführungsbeispiele

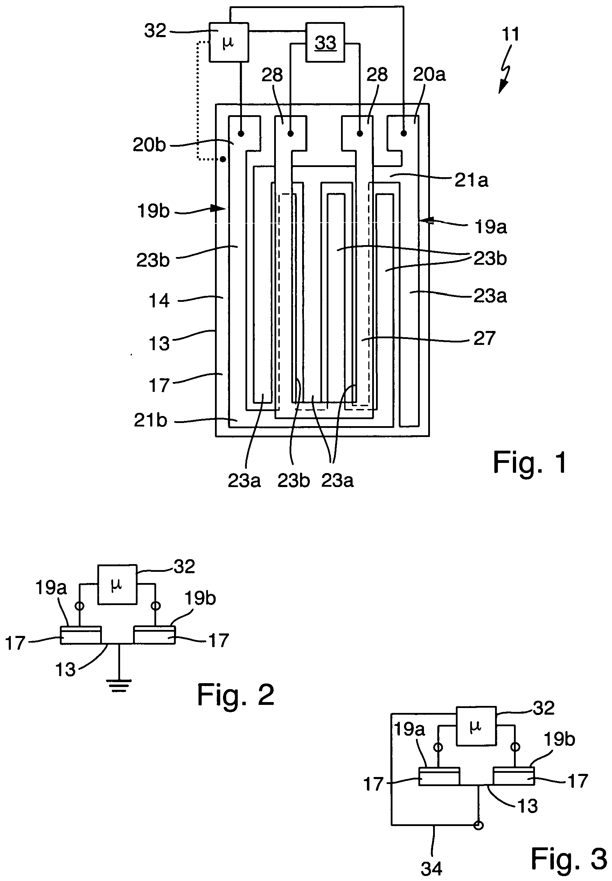

In der Fig. 1 ist eine zur Verdeutlichung einfach ausgebildete Heizeinrichtung 11 gemäß einer ersten Ausgestaltung der Erfindung in Draufsicht von oben dargestellt. Auf einem flachen rechteckigen Träger 13 aus Stahl ist auf seiner Oberseite 14 eine nicht näher zu erkennende Dielektrikumsschicht 17 vollflächig aufgebracht. Auf dieser Dielektrikumsschicht 17 wiederum sind eine erste Elektrode 19a und eine zweite Elektrode 19b aufgebracht, und zwar in einer Ebene und nebeneinander, aber ohne sich zu berühren bzw. sie sind isoliert voneinander. Die erste Elektrode 19a weist ein Anschlussfeld 20a und einen sich daran anschließenden Basisstreifen 21a auf. Von dem Basisstreifen 21a gehen drei Elektrodenfinger 23a nach unten.

Die zweite Elektrode 19b ist im Prinzip ähnlich, nur gespiegelt ausgebildet. Auch sie weist ein Anschlussfeld 20b und daran anschließend einen Basisstreifen 21b auf, allerdings ist hier dazwischen einer der Elektrodenfinger 23b vorgesehen. Drei weitere Elektrodenfinger 23b gehen von dem Basisstreifen 21b nach oben ab und reichen bis kurz vor den Basisstreifen 21a.

Über den Elektroden 19a und 19b ist eine Basisisolationsschicht aufgebracht, die deutlich dicker ausgebildet ist als die Dielektrikumsschicht 17, beispielsweise zweimal bis dreimal so dick. Auf diese wiederum ist ein Heizleiter 27 aufgebracht, der zwei Anschlussfelder 28 aufweist. Der Heizleiter 27 ist hier sehr einfach als eine einzige U-förmige Schleife dargestellt, in der Praxis ist er aber vorteilhaft deutlich komplexer ausgebildet, insbesondere mit mehr Leiterschleifen bzw. mäanderförmig, um die wesentliche Fläche der Heizeinrichtung 11 bzw. des Trägers 13 zu bedecken. Auf den Heizleiter 27 wiederum kann eine Abdeckschicht 30 aufgebracht werden, um diesen nach außen bzw. oben elektrisch zu isolieren und auch sonst zu verschließen sowie vor mechanischen Einflüssen, insbesondere Beschädigung, zu schützen.

Im Wesentlichen entspricht diese Art der Darstellung der vorgenannten EP 15168028.7, nur der Schichtaufbau ist eben anders, ebenso die Messwerterfassung.

Eine Steuerung 32 ist mit den Anschlussfeldern 20a und 20b der Elektroden 19a und 19b verbunden bzw. an diese angeschlossen. Des Weiteren ist die Steuerung 32 mit einer Leistungselektronik 33 verbunden, die wiederum an die Anschlussfelder 28 des Heizleiters 27 angeschlossen ist. Gestrichelt dargestellt ist ein Trägeranschluss 34, mit dem die Steuerung 32 unter Umständen an den Träger 13 verbunden sein kann, wie zuvor erläutert.

Aus den Ersatzschaltbildern der Fig. 2 und 3 ist zu ersehen, wie gemäß der Konfiguration der Fig. 2 zwei Kondensatoren gebildet werden, und zwar der erste Kondensator von der ersten Elektrode 19a und dem Träger 13 mit der Dielektrikumsschicht 17 dazwischen. Der zweite Kondensator wird gebildet von der Elektrode 19b und ebenfalls dem Träger 13 mit der Dielektrikumsschicht 17 dazwischen. Die Steuerung 32 ist an die beiden Elektroden 19a und 19b angeschlossen, so dass hier eine Serienschaltung der beiden Kondensatoren bzw. Kapazitäten vorliegt. Da die Dielektrikumsschicht 17 eine eingangs genannte temperaturabhängige Kapazität bzw. temperaturabhängige kapazitive Eigenschaften aufweist, ändert sich die Kapazität der beiden Kondensatoren insgesamt mit der Temperatur. Dies kann die Steuerung 32 auf bekannte Art und Weise durch Kapazitätsmessung und vor allem durch einen Vergleich mit abgespeicherten Werten erfassen. Der hauptsächliche Grund, warum hier überhaupt zwei getrennte Elektroden 19a und 19b vorgesehen sind, ist der, dass dann eine elektrische Kontaktierung an den Träger 13, der aus Sicherheitsgründen an Masse angeschlossen sein kann, nicht notwendig ist. Eine kapazitive Kopplung zwischen benachbarten Elektroden wäre kaum erfassbar, so dass hier sozusagen der Umweg über den Träger 13, der aus Metall besteht und somit elektrisch gut leitfähig ist, mit der temperaturabhängigen Dielektrikumsschicht 17 dazwischen genommen wird.

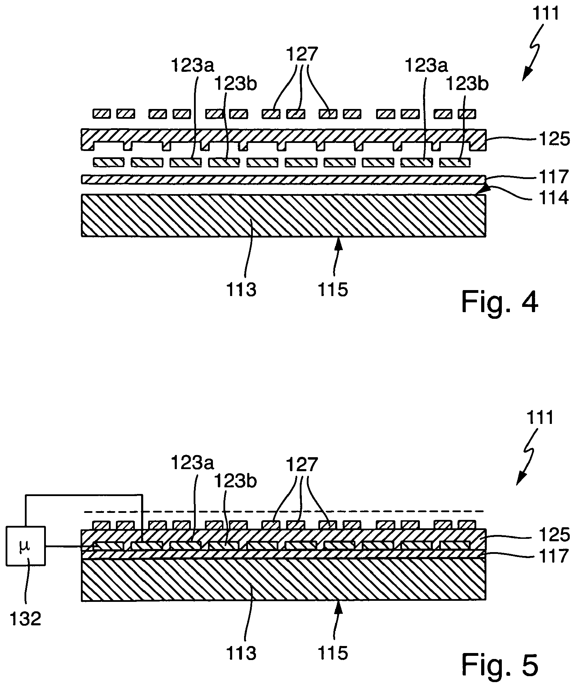

Gemäß Fig. 3 kann noch der Trägeranschluss 34 zwischen Steuerung 32 und Träger 13 vorgesehen sein. Entweder kann hier zusätzlich, beispielsweise versetzt in Messintervallen, ein Stromfluss als Leckstrom bzw. Ableitstrom von einer der Elektroden 19a und 19b über die Dielektrikumsschicht 17 an den Träger 13 erfasst werden. Dieser Strom ändert sich abhängig von der Temperatur, weil der elektrische Widerstand der Dielektrikumsschicht 17 mit zunehmender Temperatur abnimmt. Dies ist eine an sich bekannte Erfassung des sogenannten Ableitstroms, der eben mit zunehmender Temperatur größer wird aufgrund der temperaturabhängigen resistiven Eigenschaften der Dielektrikumsschicht 17. Alternativ könnte die Steuerung 32 so verschaltet sein, dass die beiden Elektroden 19a und 19b quasi auf einem Eingang liegen und der Trägeranschluss 34 auf einem anderen, so dass dann insgesamt nur der Stromfluss zwischen Elektroden 19a und 19b und Träger 13 erfasst wird, also sozusagen nur der Ableitstrom. Hier ist aber zu bemerken, dass ein Anschluss der Steuerung 32 an den Träger 13, der üblicherweise auf Masse liegen sollte, nicht ganz unproblematisch ist. Des Weiteren können Dielektrikumsschichten verwendet werden, bei denen die Änderung der kapazitiven Eigenschaften bzw. von εᵣ mit der Temperatur gefahrlos sehr groß ist, während dies bei einer temperaturabhängigen Änderung der resistiven Eigenschaften mit der Gefahr verbunden ist, dass ein Stromfluss zu groß werden würde. Aber auch hier offenbart sich ein weiterer hauptsächlicher Vorteil der Erfindung, der auch aus den Darstellungen der Fig. 4 und 5 besser deutlich wird, dass nämlich die Basisisolationsschicht über den Elektroden 19a und 19b erheblich dicker ist als die Dielektrikumsschicht 17 und darüber hinaus auch Eigenschaften aufweisen kann, die weniger temperaturabhängig sind. Somit kann durch die Basisisolationsschicht 25 ein Durchschlagen bzw. ein zu großer Leckstrom oder Ableitstrom verhindert werden. Vor allem ist eine sichere und zuverlässige elektrische Isolation gegenüber den Heizleitern 27 gegeben, was in diesem Zusammenhang von großer Bedeutung ist.

Wie zuvor erläutert worden ist, kann in der Steuerung 32 ein Zusammenhang zwischen Temperatur und Kapazität abgespeichert sein. Wenn die Steuerung 32 also eine Kapazitätsänderung an den Elektroden 19a und 19b erfasst, kann sie aufgrund des abgespeicherten Zusammenhangs in etwa die Temperatur oder zumindest eine Temperaturänderung an der Heizeinrichtung 11 bestimmen. Bei diesem Verfahren ist es entweder möglich, die Heizeinrichtung 11 gleichzeitig im Heizbetrieb und im Messbetrieb zu betreiben. Alternativ kann der Betrieb der Heizeinrichtung 11 kurzzeitig während der Messung unterbrochen werden. Dann ist die Gefahr von Messverfälschungen geringer, des Weiteren kann die Temperatur des erhitzten Mediums besser erfasst werden.

Erfasst die Steuerung 32 eine zu hohe Temperatur an der Heizeinrichtung 11, die einen vorgegebenen Wert übersteigt, so kann eine Warnung an eine Bedienperson ausgegeben werden. Alternativ oder gleichzeitig kann die Heizleistung am Heizleiter 27 gesenkt werden. In einer nächsten Stufe kann bei Überschreiten einer als kritisch angesehenen Temperatur der Heizleiter 27 abgeschaltet werden bzw. die Heizeinrichtung 11 gestoppt werden.

Ein Vorteil der Anordnung der beiden Elektroden 19a und 19b unter den Heizleitern 27 mit der Basisisolationsschicht 25 dazwischen ist der, dass dadurch eine galvanische Trennung von der Netzspannung an den Heizleitern 27 gegeben ist. Außerdem ist eine Auswertung der Messsignale an den Elektroden 19a und 19b unabhängig von der Netzspannung bzw. der Betriebsspannung an dem Heizleiter. Parallele und seriell geschaltete Netzkapazitäten sowie parasitäre Effekte werden bei dieser Anordnung, insbesondere gemäß Fig. 2, minimiert bzw. ausgeschlossen.

In der Darstellung der Fig. 4 ist gemäß einer zweiten Ausgestaltung der Erfindung für eine weitere Heizeinrichtung 111 mit erheblich mehr Elektrodenfingern 123a und 123b sowie mehreren Schleifen der Heizleiter 127 der schematische Aufbau der Schichten bzw. im auseinandergezogenen Schnitt dargestellt. Hier ist deutlich zu sehen, wie in etwa die Dickenverhältnisse der einzelnen Schichten sind mit einem relativ dicken Träger 113 aus Metall, der beispielsweise 0,5 mm bis 2 mm dick sein kann. An seiner Unterseite 115 kann das zu erhitzende Medium vorgesehen sein, beispielsweise vorbeiströmendes Wasser. Anstelle eines hier dargestellten flachen Trägers 113 kann auch ein gewölbter Träger oder sogar ein Rohr vorgesehen sein, wie dies beispielsweise auch aus der vorgenannten EP 15168028.7 bekannt ist.

Auf einer Oberseite 114 des Trägers 113 ist die Dielektrikumsschicht 117 vorgesehen mit einer Dicke von beispielsweise 20 µm bis 200 µm. Sie ist eine üblicherweise verwendete Glas-basierte Schicht mit der bekannten Eigenschaft, dass sie eine temperaturabhängige Änderung der kapazitiven Eigenschaften aufweist. Die Elektrodenfinger 123a und 123b bestehen aus gut elektrisch leitfähigem Material und weisen eine Dicke ähnlich derjenigen der Dielektrikumsschicht 117 auf, vorzugsweise 5 µm bis 20 µm.

Die über die Elektrodenfinger 123a und 123b aufgebrachte Basisisolationsschicht 125 ist wiederum deutlich dicker als die Dielektrikumsschicht 117. Somit ist sie zum einen deutlich sicherer in der Isolierung gegenüber den darüber aufgebrachten Heizleitern 127, was für die Betriebssicherheit von Vorteil ist. Des Weiteren ist dadurch eine zuvor beschriebene Temperaturmessung wegen der Änderung der kapazitiven Eigenschaften der Basisisolationsschicht 125 weniger gut möglich. Schließlich kann vor allem eine weniger temperaturabhängige Schicht als Basisisolationsschicht verwendet werden, was ebenfalls die Sicherheit verbessert.

Nur in der Fig. 5 ist gestrichelt dargestellt eine über den Heizleitern 127 aufgebrachte Abdeckschicht 130 vorgesehen. Diese isoliert die Heizleiter 127 noch einmal nach außen und schützt sie zusätzlich. Dort ist auch schematisch der Anschluss einer Steuerung 132 an die beiden Elektroden bzw. die Elektrodenfinger 123a und 123b dargestellt.

## Patentansprüche

1. Heizeinrichtung (11, 111) mit:
- einem flächigen Träger (13, 113),
- mindestens einem Heizleiter (27, 127),
- einer Messeinrichtung (32, 132),
- einer Dielektrikumsschicht (17, 117) über dem Träger, wobei die Dielektrikumsschicht kapazitive Eigenschaften aufweist, die temperaturabhängig sind,
- zwei Elektroden (19a, 19b, 119a, 119b) über der Dielektrikumsschicht, wobei die Elektroden nebeneinander verlaufen,
wobei die Messeinrichtung (32, 132) mit den beiden Elektroden (19a, 19b, 119a, 119b) verbunden ist und dazu ausgebildet ist, eine Änderung einer Kapazität an den Elektroden zu erfassen und als Maß für eine Temperaturänderung an der Heizeinrichtung (11, 111) auszuwerten,
**gekennzeichnet durch**
eine Basisisolationsschicht (25, 125) über den beiden Elektroden,
wobei über der Basisisolationsschicht der mindestens eine Heizleiter (27, 127) aufgebracht ist,
wobei jede der beiden Elektroden (19a, 19b, 119a, 119b) mehrere nebeneinander und/oder parallel zueinander verlaufende Elektrodenfinger (23b, 123a) aufweist, die ohne direkten elektrischen Kontakt mit ähnlichen Elektrodenfingern der anderen Elektrode abwechselnd nebeneinander angeordnet sind.

2. Heizeinrichtung nach Anspruch 1, **dadurch gekennzeichnet, dass** die Messeinrichtung (32, 132) nur mit zwei Eingängen der Messeinrichtung mit den beiden Elektroden verbunden ist, wobei jeder Eingang mit einer Elektrode verbunden ist.

3. Heizeinrichtung nach Anspruch 1 oder 2, **dadurch gekennzeichnet, dass** die Dielektrikumsschicht (17, 117) direkt auf den Träger (13, 113) aufgebracht ist, wobei sie vorzugsweise an einer Seite im Wesentlichen dessen gesamte Oberfläche bedeckt.

4. Heizeinrichtung nach einem der vorhergehenden Ansprüche, **dadurch gekennzeichnet, dass** die beiden Elektroden (19a, 19b, 119a, 119b) direkt auf die Dielektrikumsschicht (17, 117) aufgebracht sind, vorzugsweise beide Elektroden aus demselben Material und mit derselben Dicke.

5. Heizeinrichtung nach einem der vorhergehenden Ansprüche, **dadurch gekennzeichnet, dass** ausgehend von gegenüberliegenden Basisstreifen (21a, 21b) der Elektroden (19a, 19b, 119a, 119b) jeweils gleich viele Elektrodenfinger (23a, 23b, 123a, 123b) an jeder Elektrode vorgesehen sind.

6. Heizeinrichtung nach einem der vorhergehenden Ansprüche, **dadurch gekennzeichnet, dass** eine Breite der Elektrodenfinger (23a, 23b, 123a, 123b) der beiden Elektroden (19a, 19b, 119a, 119b) unterschiedlich ist, wobei insbesondere die Elektrodenfinger der einen Elektrode mindestens 10% breiter sind als die Elektrodenfinger der anderen Elektrode.

7. Heizeinrichtung nach einem der Ansprüche 1 bis 5, **dadurch gekennzeichnet, dass** die Gesamtflächen beider Elektroden (19a, 19b, 119a, 119b) um maximal 10% unterschiedlich sind, wobei insbesondere die Gesamtflächen beider Elektroden gleich sind.

8. Heizeinrichtung nach einem der vorhergehenden Ansprüche, **dadurch gekennzeichnet, dass** die Basisisolationsschicht (25, 125) direkt auf die beiden Elektroden (19a, 19b, 119a, 119b) aufgebracht ist.

9. Heizeinrichtung nach einem der vorhergehenden Ansprüche, **dadurch gekennzeichnet, dass** das Material der Basisisolationsschicht (25, 125) eine geringere Temperaturabhängigkeit der kapazitiven und/oder resistiven Eigenschaften aufweist als das Material der Dielektrikumsschicht (17, 117), wobei vorzugsweise die Abhängigkeit weniger als 50% derjenigen der Dielektrikumsschicht beträgt, insbesondere weniger als 20%.

10. Heizeinrichtung nach einem der vorhergehenden Ansprüche, **dadurch gekennzeichnet, dass** die Dielektrikumsschicht (17, 117) einen geringeren elektrischen Widerstand aufweist als die Basisisolationsschicht (25, 125).

11. Heizeinrichtung nach einem der vorhergehenden Ansprüche, **dadurch gekennzeichnet, dass** auf die Basisisolationsschicht (25, 125) die Heizleiter (27, 127) aufgebracht sind, wobei vorzugsweise alle Heizleiter der Heizeinrichtung (11, 111) auf die Basisisolationsschicht und nebeneinander aufgebracht sind.

12. Heizeinrichtung nach einem der vorhergehenden Ansprüche, **dadurch gekennzeichnet, dass** die Messeinrichtung (32, 132) zusätzlich mit dem Träger (13, 113) verbunden ist und dazu ausgebildet ist, den elektrischen Widerstand zwischen mindestens einer der beiden Elektroden (19a, 19b, 119a, 119b), vorzugsweise beider Elektroden, und dem Träger zu erfassen und als Maß für eine Temperaturänderung an der Heizeinrichtung (11, 111) auszuwerten anhand einer in der Messeinrichtung abgespeicherten Abhängigkeit des temperaturabhängigen elektrischen Widerstands der Dielektrikumsschicht (17, 117).

13. Verfahren zur Temperaturmessung an einer Heizeinrichtung (11, 111) nach einem der vorhergehenden Ansprüche, **dadurch gekennzeichnet, dass** sich die Kapazität, die an den beiden Elektroden (19a, 19b, 119a, 119b) gemessen wird, mit der Temperatur in bekannter und abgespeicherter Art und Weise sich ändert, insbesondere ansteigt mit zunehmender Temperatur, wobei die Messeinrichtung (32, 132) die Kapazität bezüglich der Dielektrikumsschicht (17, 117) erfasst und daraus aufgrund eines abgespeicherten und/oder bekannten Zusammenhangs die Temperatur an der Heizeinrichtung bestimmt.

14. Verfahren zur Temperaturmessung an einer Heizeinrichtung nach Anspruch 12, **dadurch gekennzeichnet, dass** sich der elektrische Widerstand der Dielektrikumsschicht (17, 117) mit zunehmender Temperatur ändert, insbesondere abnimmt in bekannter und abgespeicherter Art und Weise, wobei die Messeinrichtung (32, 132) diesen elektrischen Widerstand zwischen Elektroden (10a, 19b, 119a, 119b) und dem Träger (13, 113) erfasst und daraus aufgrund des abgespeicherten Zusammenhangs die Temperatur an der Heizeinrichtung (11, 111) bestimmt.

15. Verfahren nach Anspruch 13 oder 14, **dadurch gekennzeichnet, dass** der Heizbetrieb der Heizeinrichtung (11, 111) unterbrochen wird während die Messeinrichtung (32, 132) betrieben wird.

## Claims

1. Heating device (11, 111), comprising:
- a flat support (13, 113),
- at least one heating conductor (27, 127),
- a measuring device (32, 132),
- a dielectric layer (17, 117) above the support, wherein the dielectric layer has capacitive properties which are a function of temperature,
- two electrodes (19a, 19b, 119a, 119b) above the dielectric layer, wherein the electrodes run side by side,
wherein the measuring device (32, 132) is connected to the two electrodes (19a, 19b, 119a, 119b) and is configured to detect a change in capacity at the electrodes and to evaluate it as a measure for a temperature change on the heating device (11, 111), **characterized by**
a base insulating layer (25, 125) above the two electrodes,
wherein the at least one heating conductor (27, 127) is applied above the base insulating layer,
wherein each of the two electrodes (19a, 19b, 119a, 119b) has numerous electrode fingers (23b, 123a) running side by side and/or in parallel to each other, which are disposed alternatingly side by side without direct electrical contact to similar electrode fingers of the other electrode.

2. Heating device according to claim 1, **characterized in that** the measuring device (32, 132) is connected to the two electrodes merely by two inputs of the measuring device, wherein each input is connected to one electrode.

3. Heating device according to claim 1 or 2, **characterized in that** the dielectric layer (17, 117) is applied directly to the support (13, 113), wherein preferably the layer covers essentially the entire surface of the support on one side.

4. Heating device according to any of the preceding claims, **characterized in that** the two electrodes (19a, 19b, 119a, 119b) are applied directly to the dielectric layer (17, 117), preferably both electrodes made of the same material and having the same thickness.

5. Heating device according to any of the preceding claims, **characterized in that**, starting from opposite base strips (21a, 21b) of the electrodes (19a, 19b, 119a, 119b), in each case an equal number of electrode fingers (23b, 23b, 123a, 123b) are provided on each electrode.

6. Heating device according to any of the preceding claims, **characterized in that** a width of the electrode fingers (23b, 23b, 123a, 123b) of the two electrodes (19a, 19b, 119a, 119b) is differing, wherein in particular the electrode fingers of the one electrode is at least 10 % wider than the electrode fingers of the other electrode.

7. Heating device according to any of the claims 1 to 5, **characterized in that** the total surface areas of both electrodes (19a, 19b, 119a, 119b) differ by a maximum of 10 %, wherein in particular the total surface areas of both electrodes are the same.

8. Heating device according to any of the preceding claims, **characterized in that** the base insulating layer (25, 125) is applied directly to the two electrodes (19a, 19b, 119a, 119b).

9. Heating device according to any of the preceding claims, **characterized in that** the material of the base insulating layer (25, 125) exhibits a lesser temperature dependence of the capacitive and/or resistive properties than the material of the dielectric layer (17, 117), wherein preferably the dependence is less than 50 % of that of the dielectric layer, in particular less than 20 %.

10. Heating device according to any of the preceding claims, **characterized in that** the dielectric layer (17, 117) exhibits a lower electrical resistance than the base insulating layer (25, 125).

11. Heating device according to any of the preceding claims, **characterized in that** the heating conductors (27, 127) are applied to the base insulating layer (25, 125), wherein preferably all heating conductors of the heating device (11, 111) are applied to the base insulating layer and side by side.

12. Heating device according to any of the preceding claims, **characterized in that** the measuring device (32, 132) additionally is connected to the support (13, 113) and is configured to detect the electrical resistance between at least one of the two electrodes (19a, 19b, 119a, 119b), preferably both electrodes, and the support and evaluate it as a measure for a temperature change on the heating device (11, 111), on the basis of a dependence of the electrical resistance of the dielectric layer (17, 117), which resistance is a function of temperature, stored in the measuring device.

13. Method for measuring temperature on a heating device (11, 111) according to any of the preceding claims, **characterized in that** the capacity which is measured on the two electrodes (19a, 19b, 119a, 119b) varies with temperature in a well-known and stored manner, in particular increases with increasing temperature, wherein the measuring device (32, 132) detects the capacity in relation to the dielectric layer (17, 117) and determines the temperature on the heating device therefrom on the basis of a stored and/or well-known interrelation.

14. Method for measuring temperature on a heating device according to claim 12, **characterized in that** the electrical resistance of the dielectric layer (17, 117) varies with increasing temperature, in particular decreases in a well-known and stored manner, wherein the measuring device (32, 132) detects said electrical resistance between electrodes (19a, 19b, 119a, 119b) and the support (13, 113) and determines the temperature on the heating device (11, 111) therefrom on the basis of the stored interrelation.

15. Method according to claim 13 or 14, **characterized in that** the heating operation of the heating device (11, 111) is suspended while the measuring device (32, 132) is operating.

## Revendications

1. Dispositif chauffant (11, 111), comprenant:
- un élément porteur (13, 113) plat,
- au moins un conducteur chauffant (27, 127),
- un dispositif de mesure (32, 132),
- une couche diélectrique (17, 117) au-dessus de l'élément porteur, la couche diélectrique possédant des propriétés capacitives qui sont dépendantes de la température,
- deux électrodes (19a, 19b, 119a, 119b) au-dessus de la couche diélectrique, les électrodes s'étendant l'une à côté de l'autre,
le dispositif de mesure (32, 132) étant relié aux deux électrodes (19a, 19b, 119a, 119b) et étant configuré pour détecter une modification de la capacité au niveau des électrodes et l'interpréter en tant que mesure pour une variation de température au niveau du dispositif chauffant (11, 111),
**caractérisé par**
une couche isolante de base (25, 125) au-dessus des deux électrodes,
l'au moins un conducteur chauffant (27, 127) étant appliqué sur la couche isolante de base,
chacune des deux électrodes (19a, 19b, 119a, 119b) possédant plusieurs tiges d'électrode (23b, 123a) qui s'étendent les unes à côté des autres et/ou parallèlement les unes aux autres, lesquelles sont disposées en alternance les unes à côté des autres sans contact électrique direct avec des tiges d'électrode similaires de l'autre électrode.

2. Dispositif chauffant selon la revendication 1, **caractérisé en ce que** le dispositif de mesure (32, 132) est relié aux deux électrodes seulement par deux entrées du dispositif de mesure, chaque entrée étant reliée à une électrode.

3. Dispositif chauffant selon la revendication 1 ou 2, **caractérisé en ce que** la couche diélectrique (17, 117) est appliquée directement sur l'élément porteur (13, 113), celle-ci recouvrant de préférence sensiblement la totalité de sa surface sur un côté.

4. Dispositif chauffant selon l'une des revendications précédentes, **caractérisé en ce que** les deux électrodes (19a, 19b, 119a, 119b) sont appliquées directement sur la couche diélectrique (17, 117), de préférence deux électrodes du même matériau et ayant la même épaisseur.

5. Dispositif chauffant selon l'une des revendications précédentes, **caractérisé en ce qu'**en partant des bandes de base (21a, 21b) opposées des électrodes (19a, 19b, 119a, 119b), un nombre égal de tiges d'électrode (23a, 23b, 123a, 123b) sont respectivement prévues au niveau de chaque électrode.

6. Dispositif chauffant selon l'une des revendications précédentes, **caractérisé en ce qu'**une largeur des tiges d'électrode (23a, 23b, 123a, 123b) des deux électrodes (19a, 19b, 119a, 119b) est différente, les tiges d'électrode d'une électrode étant notamment au moins 10 % plus larges que les tiges d'électrode de l'autre électrode.

7. Dispositif chauffant selon l'une des revendications 1 à 5, **caractérisé en ce que** les surfaces totales des deux électrodes (19a, 19b, 119a, 119b) présentent une différence maximale de 10%, les surfaces totales des deux électrodes étant notamment égales.

8. Dispositif chauffant selon l'une des revendications précédentes, **caractérisé en ce que** la couche isolante de base (25, 125) est appliquée directement sur les deux électrodes (19a, 19b, 119a, 119b).

9. Dispositif chauffant selon l'une des revendications précédentes, **caractérisé en ce que** le matériau de la couche isolante de base (25, 125) présente une dépendance à la température des propriétés résistives et/ou capacitives plus faible que le matériau de la couche diélectrique (17, 117), la dépendance étant de préférence inférieure à 50 % de celle de la couche diélectrique, notamment inférieure à 20 %.

10. Dispositif chauffant selon l'une des revendications précédentes, **caractérisé en ce que** la couche diélectrique (17, 117) possède une résistance électrique inférieure à celle de la couche isolante de base (25, 125).

11. Dispositif chauffant selon l'une des revendications précédentes, **caractérisé en ce que** les conducteurs chauffants (27, 127) sont appliqués sur la couche isolante de base (25, 125), tous les conducteurs chauffants du dispositif chauffant (11, 111) étant de préférence appliqués sur la couche isolante de base et les uns à côté des autres.

12. Dispositif chauffant selon l'une des revendications précédentes, **caractérisé en ce que** le dispositif de mesure (32, 132) est en plus relié à l'élément porteur (13, 113) et configuré pour détecter la résistance électrique entre au moins l'une des deux électrodes (19a, 19b, 119a, 119b), de préférence les deux électrodes, et l'élément porteur et l'interpréter en tant que mesure pour une variation de température au niveau du dispositif chauffant (11, 111) à l'aide d'une dépendance, mémorisée dans le dispositif de mesure, de la résistance électrique dépendante de la température de la couche diélectrique (17, 117).

13. Procédé de mesure de la température au niveau d'un dispositif chauffant (11, 111) selon l'une des revendications précédentes, **caractérisé en ce que** la capacité qui est mesurée au niveau des deux électrodes (19a, 19b, 119a, 119b) varie d'une manière connue et mémorisée en fonction de la température, notamment augmente à mesure que la température s'élève, le dispositif de mesure (32, 132) détectant la capacité en référence à la couche diélectrique (17, 117) et déterminant à partir de celle-ci la température au niveau du dispositif chauffant en fonction d'une relation mémorisée et/ou connue.

14. Procédé de mesure de la température au niveau d'un dispositif chauffant selon la revendication 12, **caractérisé en ce que** la résistance électrique de la couche diélectrique (17, 117) varie, notamment diminue, d'une manière connue et mémorisée à mesure que la température augmente, le dispositif de mesure (32, 132) détectant cette résistance électrique entre les électrodes (10a, 19b, 119a, 119b) et l'élément porteur (13, 113) et déterminant à partir de celle-ci la température au niveau du dispositif chauffant (11, 111) en fonction de la relation mémorisée.

15. Procédé selon la revendication 13 ou 14, **caractérisé en ce que** le régime de chauffage du dispositif chauffant (11, 111) est interrompu pendant le fonctionnement du dispositif de mesure (32, 132).
